# EUROPÄISCHE PATENTSCHRIFT

(11) **EP 0 297 320 B1**
(45) Veröffentlichungstag und Bekanntmachung des Hinweises auf die Patenterteilung: **14.04.1993**
(21) Anmeldenummer: 88109177.1
(22) Anmeldetag: 09.06.1988
(51) Int. Cl.: F16B 41/00, E06B 9/01

(54) **Verbindungseinrichtung**
Connecting device
Dispositif de raccordement

(30) Priorität: 02.07.1987 DE 3721869
(43) Veröffentlichungstag der Anmeldung: 04.01.1989
(73) Patentinhaber: TEFO AG, CH-6300 Zug (CH)
(72) Erfinder: Steinmetz, Georg, D-6550 Bad Kreuznach (DE)
(74) Vertreter: Schickedanz, Willi, Dipl.-Ing.

(56) Entgegenhaltungen:
- EP-A- 0 060 379
- DE-A- 2 257 873
- DE-C- 1 011 138
- DE-U- 1 870 603
- DE-U- 7 802 576
- GB-A- 2 130 147

## Beschreibung

Die Erfindung betrifft eine Verbindungseinrichtung nach dem Oberbegriff des Patentanspruchs 1, bei der ein erster und ein zweiter Steg aufeinanderliegen und durch wenigstens eine Schraub- und Nietverbindung miteinander verbunden sind.

Gitter für Türen, Zäune und dergleichen werden meistens in Schmiedewerkstätten oder in Schlossereien hergestellt. Die Herstellung eines Gitters für eine ornamental wirkungsvolle Tür erfordert in der Regel großes handwerkliches Können, so daß Heimwerker oder nur angelernte Arbeiter nicht in der Lage sind, ein solches Gitter herzustellen.

Es ist bereits vorgeschlagen worden, derartige Gitter mit Hilfe von vorgefertigten Teilen herzustellen, wobei der Zusammenbau dieser vorgefertigten Teile auch für den Nicht-Fachmann möglich ist. Beispielsweise wurden als vorgefertigte Teile Ornamentelemente gewählt, die bei einem Gitter regelmäßig wiederkehren. Durch Verbinden sehr vieler dieser Ornamentelemente können großflächige Gitter hergestellt werden. Als Verbindungselemente werden hierbei Aussparungen und Vorsprünge in den Ornamentelementen vorgesehen, die wie Feder und Nut ineinandergeschoben und mit zusätzlichen Rastelementen umgeben werden (DE-U-18 70 603).

Wie sich in der Praxis gezeigt hat, genügen reine Steckverbindungen nicht den hohen Stabilitätsanforderungen, die bei Gitter-Türen und -Zäunen erfüllt werden müssen. Selbst bei sehr genauer Bearbeitung von Federn und Nuten treten immer noch Verschiebebewegungen auf, die zwar als einzelne relativ klein sind, aber in der Gesamtheit und bei großen Gitterfeldern nicht mehr toleriert werden können. Herkömmliche Schraub- und Nietverbindungen haben sich als zuverlässiger erwiesen. Allerdings tritt bei Schraub- und Nietverbindungen das Problem der mangelhaften Einbruchssicherheit auf, weil die Schrauben und Nieten leicht entfernt werden können.

Bei einem anderen Aufbauelement für ein Schutz- und Ziergitter wird das Einzelelement aus einem Nichteisenmetall in Form eines Druckgußteils hergestellt, wobei zum Aufbau höherer Einheiten ein Verkleben, Versplinten oder Verschrauben mit anderen Elementen möglich ist (DE-U-73 01 882). Nähere Einzelheiten über die Art der Verbindung der Elemente sind nicht erwähnt.

Für eine Glasdachdeckung wurde bereits vorgeschlagen, zwei Glasplatten mittels einer speziellen Schraubverbindung zu verbinden und die Schraube durch Schienen abzudecken, damit kein Regenwasser einsickern kann und damit Unbefugte die Schraubverbindungen nicht lösen können (DE-B-10 11 138). Für die Abdeckung von Schrauben oder Nieten an den Verbindungsstellen von Einzelelementen, die ein Ziergitter oder dergleichen bilden, sind die bekannten Schienen jedoch nicht geeignet, da sie sich mangels einer Arretierung leicht entfernen lassen.

Eine andere bekannte Schutzhaube für eine Schraube weist eine hohle, halbkugelige Form auf, wobei die Wandung an einer offenen Seite in eine Dichtlippe ausläuft (DE-U-81 25 649). Diese Schutzhaube ist lediglich dafür geeignet, einen Schraubenkopf abzudecken und abzudichten, einen Schutz gegen unbefugtes Entfernen der Schrauben bietet sie dagegen nicht.

Eine Sicherheitsschelle, mit der z. B. ein Schraubenkopf gegen unbefugtes Entfernen gesichert werden kann, ist ebenfalls bekannt (GB-A-2 130 147). Diese Sicherheitsschelle besteht aus zwei hohlen halbzylindrischen Teilen, die an einer Stelle durch ein Scharnier miteinander verbunden sind und die mittels Schnappelementen zu einem hohlen Zylinder vereinigt werden können. Für die Abdeckung von Verbindungsschrauben bei Ziergittern, die in einer Vertiefung liegen, ist diese bekannte Schelle nicht geeignet, weil ihr radialer Platzbedarf zu groß ist.

Dasselbe gilt auch für eine andere bekannte Schelle, die bei der Verbindung von Röhren verwendet wird (GB-A-2 100 380).

Eine andere Art der Abdeckung von Schraubenköpfen ist bei einem Plombierelement bekannt, das als biegesteifes Formteil ausgebildet und mit einem anschraubbaren Bauteil lösbar verbindbar ist (DE-U-78 02 576). Diese Abdeckung ist jedoch ebenfalls nicht für zusammenbaubare Ziergitter verwendbar, weil sie keine formschöne und von allen Seiten geschlossene Abdeckung bildet.

Schließlich ist auch noch eine Diebstahlsicherung für Heizkörperventil-Thermostate bekannt, die zwei aneinander festlegbare Ringhalbschalen aufweist, die eine die Thermostate mit dem Heizkörperventil verbindende Überwurfmutter umgreifen (EP-A 0 060 379). Die Ringhalbschalen weisen hierbei eine Umfangsnut auf und sind von einem axial überschiebbaren, geschlossenen metallischen Sicherungsring umgeben. Auch diese Diebstahlsicherung ist für zusammenbaubare Ziergitter nicht geeignet, da lediglich der radiale Umfang abgedeckt wird, aber nicht die Fläche senkrecht hierzu.

Der Erfindung liegt die Aufgabe zugrunde, eine Verbindungseinrichtung für Gitter und dergleichen, die aus verschiedenen Einzelbauteilen zusammengesetzt werden, zu schaffen, wobei trotz Verwendung von Schrauben und Nieten eine große Sicherheit gegen die Zerstörungen der Verbindung der Einzelbauteile gewährleistet ist.

Diese Aufgabe wird durch eine Vorrichtung gelöst, welche die Schraubenköpfe bzw. Nieten bzw. Muttern der Schraub- bzw. Nietverbindung derart abdeckt, daß diese Schraubenköpfe, Nieten oder Muttern von außen unzugänglich sind.

Der mit der Erfindung erzielte Vorteil besteht insbesondere darin, daß sich die unterschiedlichsten Bauelemente auf sehr einfache Weise zu einem Gitter oder einer ähnlichen Konstruktion zusammenbauen lassen. Die erfindungsgemäße Verbindungseinrichtung ist somit für den Verkauf in Baumärkten und Do-it-yourself-Märkten mit hohem Qualitätsstandard geeignet. Auch Schlossereien, Türfabriken und Metallbaubetriebe für Fenstergitter, Türgitter, Einfriedigungen und Geländer können die Verbindungseinrichtung sinnvoll verwenden. Je nach den zu verbindenden Einzelbauteilen können Tischgestelle, Bettgestelle oder Sitzmöbelgestelle hergestellt werden, was insbesondere für die Möbelbranche von Bedeutung ist. Im Innenausbau können die mit der erfindungsgemäßen Verbindungseinrichtung hergestellten Gitter als Raumteiler oder als Lichtdecken verwendet werden. Auch für Schaufensterdekorationen oder als Zierelemente sind derartige Gitter geeignet. Die miteinander zu verbindenden Bauteile können aus Holz, Kunststoff, Metall oder einem anderen geeigneten Material bestehen.

Ein Ausführungsbeispiel der Erfindung ist in der Zeichnung dargestellt und wird im folgenden näher beschrieben. Es zeigen:
- Fig. 1: die Profile zweier miteinander über eine Nietverbindung verbundener Teile;
- Fig. 2: zwei Elemente, die für die Sicherung und Abdeckung von Nieten bzw. Schrauben vorgesehen sind;
- Fig. 3: die Profile zweier über Schraube und Schraubenmutter verbundener Teile;
- Fig. 4: die in der Fig. 2 dargestellten Elemente nach ihrer Montage;
- Fig. 5: zwei mittels der erfindungsgemäßen Verbindungseinrichtung miteinander verbundene Bauteile, von denen ein Bauteil zusätzlich mit einem Eckprofil verbunden ist;
- Fig. 6: eine alternative Verbindung eines Bauteils mit einem Eckprofil;
- Fig. 7a - f: Gitter mit unterschiedlichen Gitterelementen.

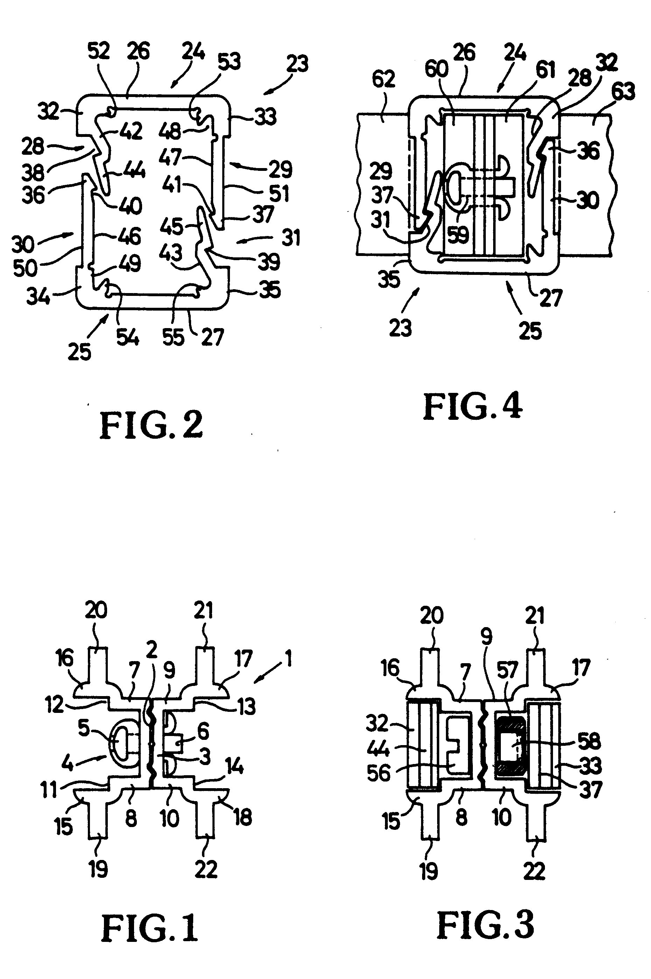

Bei der in der Fig. 1 dargestellten Verbindungseinrichtung 1 sind zwei im wesentlichen parallele Stege 2, 3 aufeinander gelegt und mittels eines Niets 4 verbunden. Ein Nietenkopf 5 befindet sich hierbei auf dem Steg 2, während ein Nietstift 6 aus dem Steg 3 herausragt. Die Stege 2, 3 werden seitlich durch Schenkel 7, 8 bzw. 9, 10 begrenzt, die senkrecht auf diesen Stegen 2, 3 stehen. Diese Schenkel 7 - 10 sind etwa so hoch wie der Nietenkopf 5 oder der herausragende Teil des Nietstifts 6 und gehen an ihren Enden in kleine, parallel zu den Stegen 2, 3 verlaufende Stege 11 - 14 über, an die sich weitere Schenkel 15 - 18 anschließen, welche parallel zu den Schenkeln 7 - 10 verlaufen. Senkrecht auf den Schenkeln 15 - 18 sind Teile 19 - 22 von im einzelnen nicht dargestellten Bauteilen angeordnet. Bei diesen Bauteilen handelt es sich beispielsweise um Ornamenteinheiten, die mehrfach innerhalb eines Gitters auftreten.

Würde die Verbindungseinrichtung 1 so offen bleiben, wie es die Fig. 1 zeigt, so könnte der Niet 4 relativ leicht mit Hilfe einer Spezialzange entfernt und damit ein geschlossenes Gitter durchbrochen werden. Um dies zu verhindern, schlägt die Erfindung eine Abdeckung für den Niet 4 vor, die außerdem noch die Verbindungseinrichtung 1 stabilisiert.

Diese Abdeckung wird durch eine Vorrichtung 23 realisiert, wie sie in der Fig. 2 dargestellt ist. Sie besteht aus zwei gleich aufgebauten Elementen 24, 25, die jeweils einen Grund- oder Haltesteg 26, 27 sowie zwei seitliche Schenkel 28, 29 bzw. 30, 31 aufweisen. Der eine seitliche Schenkel 29, 30 ist hierbei länger als der andere seitliche Schenkel 28, 31. Außerdem steht der Schenkel 29, 30 senkrecht auf dem Grundsteg 26, 27, während der Schenkel 28, 31 in seiner Gesamtheit zu dem Grundsteg 26, 27 geneigt ist. Alle Schenkel 28 - 31 weisen indessen einen unteren Bereich 32 - 35 auf, der senkrecht auf dem Grundsteg 26, 27 steht und eine Profilstärke besitzt, die etwa der Profilstärke des Grundstegs 26, 27 entspricht.

Die größeren Schenkel 29, 30 weisen an ihrem Ende jeweils eine Schnappnase 36, 37 mit einer Kehle 40, 41 auf, wobei die Schnappnasen 36, 37 im montierten Zustand in entsprechende Aussparungen 38, 39 auf der Außenseite der schrägen und kleineren Schenkel 28, 31 eingreifen. Die Schenkel 28, 31 weisen im Anschluß an ihren unteren Bereich 32, 35 einen ersten schrägen Bereich 42, 43 mit einer ersten Steigung und einen zweiten schrägen Bereich 44, 45 mit einer zweiten Steigung auf. Zwischen den unteren Bereichen 32, 35 und den schrägen Bereichen 44, 45 sind die Aussparungen 38, 39 vorgesehen.

Die Innenflächen 46, 47 der längeren Schenkel 29, 30 verlaufen parallel zu den Innenflächen 48, 49 der unteren Bereiche 33, 34, während die Außenflächen 50, 51 dieser Schenkel 29, 30 gegenüber den Außenflächen der unteren Bereiche 33, 34 etwa um ein Drittel nach innen versetzt sind.

Zwischen den Grund- und Haltestegen 26, 27 und den geraden und schrägen Schenkeln 28 - 31 ist jeweils ein dreieckförmiger Vorsprung 52, 53, 54, 55 vorgesehen, der dazu dient, daß die Elemente 24, 25 im montierten Zustand fest auf den Stegen 11 - 14 aufliegen.

In der Fig. 3 ist eine erfindungsgemäße Verbindungseinrichtung dargestellt, die bei einer Schraubverbindung angewendet ist. Von dieser Schraubverbindung erkennt man einen Schraubenkopf 56, eine Schraubenmutter 57 und einen Schraubenschaft 58. Außerdem ist ein Element 24 in einer Ansicht auf die Enden der Schenkel 28, 29 zu erkennen, wobei die unteren Bereiche 32, 33 sichtbar sind. Das zweite Element 25 ist in der Fig. 3 nicht sichtbar. Wird dieses zweite Element 25 in die Zeichenebene derart hineinbewegt, daß die Schenkel die in der Fig. 2 gezeigte Stellung haben, so rasten die beiden Elemente ineinander und sind nicht mehr lösbar.

Die Fig. 4 zeigt eine Nietverbindung 59, die zwei Teile 60, 61 miteinander verbindet, welche senkrecht auf Schienen 62, 63 stehen. Hierbei umfaßt eine erfindungsgemäße Vorrichtung 23 die beiden Teile 60, 61 zusammen mit der Nietverbindung 59. Gegenüber der Anordnung gemäß Fig. 2 sind in der Fig. 4 die Schenkel 28, 29 bzw. 30, 31 um 180° gedreht. Die beiden Elemente 24, 25 befinden sich hier im eingebauten bzw. eingerasteten Zustand. Die Nietverbindung 59 ist von außen jetzt nicht mehr zugänglich, da die Elemente 24, 25 aus einem sehr harten und wenig biegbaren Material bestehen. Die geschaffene Verbindungseinrichtung ist beispielsweise nicht dadurch lösbar, daß der Schenkel 29, 30 angehoben wird, denn die Schnappnase 36, 37 ist fest eingerastet. Außerdem liegt die Schnappnase 36, 37 im Vergleich zum unteren Bereich 32, 35 vertieft und ist hierdurch schwer zugänglich.

Soll die hergestellte Verbindung lösbar sein, beispielsweise weil Ziergitter für Dekorationen hergestellt wurden, die wieder abgebaut werden sollen, so wird eine an ihrer Spitze abgerundete Schnappnase 36, 37 vorgesehen.

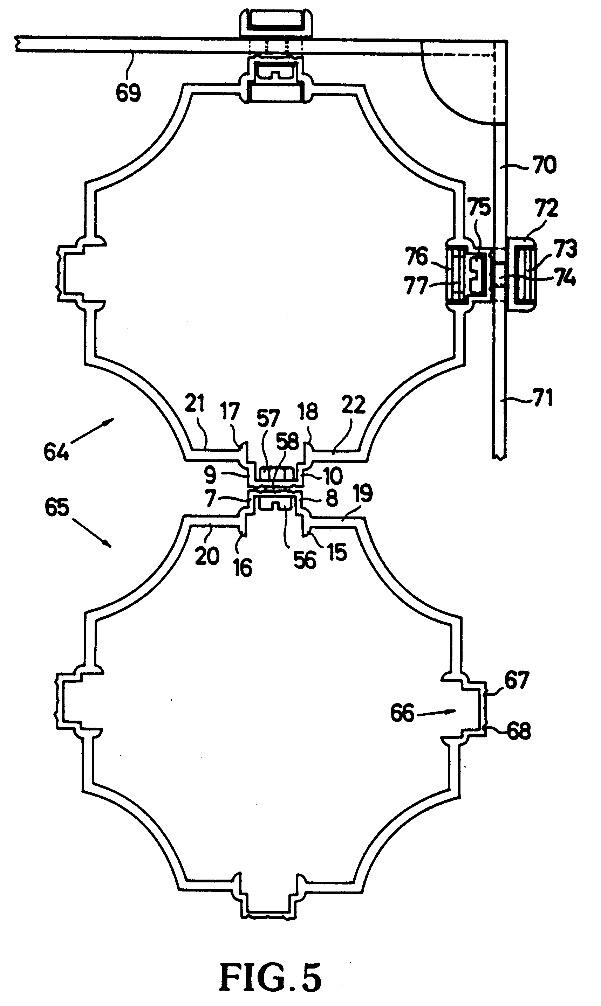

In der Fig. 5 sind zwei Bauelemente 64, 65 dargestellt, die Bestandteil eines größeren Gitters sind. Die beiden Bauelemente 64, 65 sind hierbei mittels einer Schraube 56, 58 und einer Mutter 57 miteinander verbunden. Bei einem freien Steg 66 des Bauelements 65 erkennt man deutlich, daß dieser Steg 66 auf seiner Außenseite nicht ganz eben ist, sondern Vertiefungen 67, 68 aufweist. Hierdurch wird ein Verdrehen aufeinanderliegender Stege verhindert.

Ein Gitter, das in der Regel aus zahlreichen Bauelementen 64, 65 besteht, ist im allgemeinen mit einem Rahmen verbunden. Teile 69, 70 eines solchen Rahmens sind in der Fig. 5 dargestellt. Der Anschluß des Gitters an den Rahmen kann in der Weise erfolgen, daß auf der Außenseite eines Rahmenteils 71 ein U-förmiges Element 72 vorgesehen ist, in dem sich ein Schenkel 73 befindet, in den der Schaft 74 einer Schraube 75 hineingeschraubt werden kann. Ein zweiter Schenkel 76, der auf der Innenseite des Rahmenteils vorgesehen ist, ist hierbei mit einer Aussparung 77 versehen, so daß die Schraube 75 verschraubt werden kann.

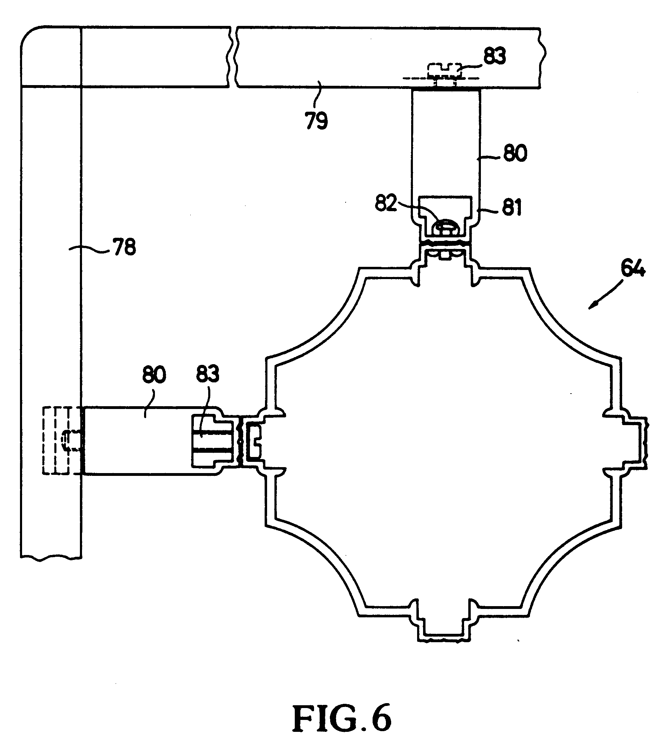

Die Fig. 6 zeigt eine weitere Möglichkeit, wie ein Bauelement 64 mit einem Rahmen 78, 79 verbunden werden kann. Hierbei ist ein Distanzstück 80 mit einem Rahmenteil 79 mittels einer Schraube 83 verschraubt. Das nach innen gerichtete Ende 81 dieses Distanzstücks 80 ist ebenso ausgebildet wie diejenigen Teile des Bauelements 64, die für die Herstellung einer Verbindung vorgesehen sind. Hierdurch läßt sich die gleiche Verbindung herstellen, die bereits anhand der Fig. 1 beschrieben wurde. Die Verbindung kann mittels eines Niets 82 oder mittels einer Schraube 83 hergestellt werden.

Wird die Schraube 83 in das Distanzstück 80 eingeschraubt, so weisen wenigstens die beiden Schenkel eines der beiden Elemente 24, 25, die in der Fig. 6 nicht dargestellt sind, Längsnuten auf, damit diese den Schaft der Schraube 83 umfassen.

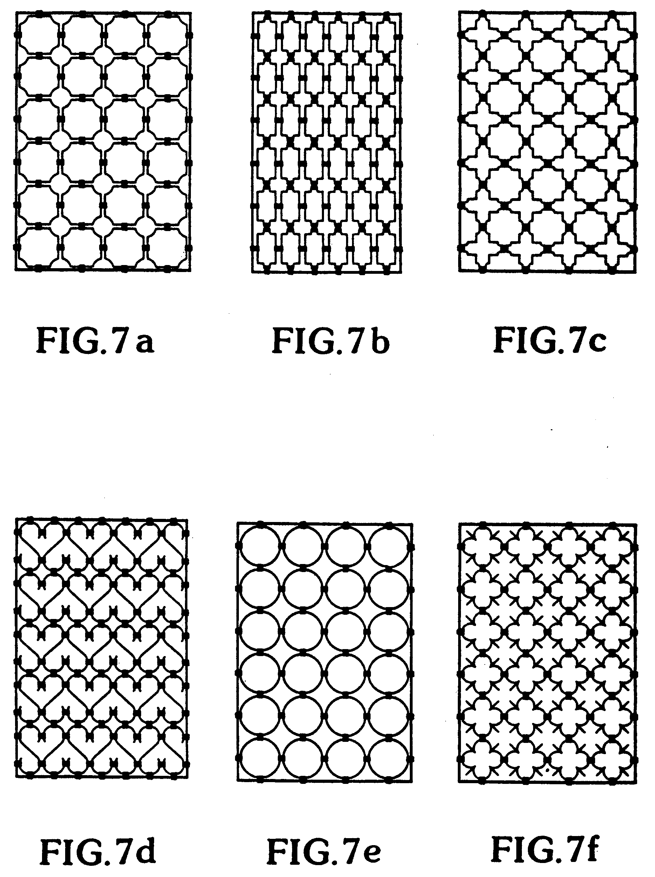

Die Fig. 7a - 7f zeigen verschiedene Varianten von Gittern, die mit der erfindungsgemäßen Verbindungseinrichtung hergestellt werden können. Weitere Varianten sind selbstverständlich ebenfalls realisierbar.

Wie sich aus den Fig. 3 bis 7f ergibt, kann die in der Fig. 2 dargestellte Vorrichtung 23 auf verschiedene Weise eingesetzt werden. Mit ihr werden nicht nur die Verbindungsstellen zwischen verschiedenen gleichartigen Bauteilen untereinander wirksam abgedeckt, sondern auch die Verbindungsstellen zwischen diesen Bauteilen und Rahmen. In allen Fällen (vgl. Fig. 3, Pos. 32, 44; 33, 37; Fig. 5, Pos. 76, 73; Fig. 6, bei Pos. 82, 83 nicht dargestellt) handelt es sich um dieselbe Vorrichtung 23, die lediglich einmal ohne und einmal mit einer Nut in den Schenkeln versehen ist.

Ein besonderer Vorteil der Vorrichtung 23 besteht darin, daß sie nicht nur Schrauben und Nieten verdeckt, sondern daß sie auch eine stabilisierende Wirkung hat. Wie z. B. aus der Fig. 3 ersichtlich ist, können sich die Teile 19, 20 nicht gegen die Teile 21, 22 verdrehen, weil sie hieran durch die Vorrichtung 23, welche durch die Bezugszahlen 32, 44; 33, 37 angedeutet ist, gehindert werden. Eine weitere Sicherung gegen Verdrehen bewirken die Rillen 67, 68 in den Stegen 2, 3. Diese Rillen 67, 68 sind so ausgebildet, daß einer Rille an dem einen Steg 2 eine Erhebung an dem anderen Steg 3 entspricht.

## Patentansprüche

1. Verbindungseinrichtung, bei der ein erster und ein zweiter Steg (2, 3) aufeinanderliegen und durch wenigstens eine Schraub- oder Nietverbindung (4) miteinander verbunden sind, wobei die Längsachse einer Schraube oder Niete (5, 6) im wesentlichen senkrecht zu den Stegen (2, 3) verläuft und ein Element (24) vorgesehen ist, das ein im wesentlichen U-förmiges Profil mit einem Grundsteg (2) und zwei hierauf im wesentlichen senkrecht stehenden Schenkeln (28, 29) aufweist und die Schraubköpfe (56) bzw. Nieten (5, 6) bzw. Muttern der Schraubverbindungen derart abdeckt, daß diese unzugänglich sind, wobei der erste der beiden Stege (2) zwei von dem zweiten Steg (3) wegweisende Schenkel (7, 8) aufweist, die wenigstens so hoch wie die Schraubenköpfe (56), Muttern (57) oder Nieten (5, 6) sind und einen Abstand voneinander haben, der in der Nähe des ersten Stegs (2) kleiner ist als in einer größeren Entfernung von diesem Steg (2), **gekennzeichnet durch** folgende Merkmale:
a) zwischen dem kleineren und dem größeren Abstand der beiden Schenkel (7, 8) des Stegs (2) ist eine Übergangsstufe (11, 12) vorgesehen, die senkrecht zu den Schenkein (7, 8) verläuft;
b) der größere Abstand zwischen den beiden Schenkeln (7, 8) des Stegs (2) entspricht der Breite eines Schenkels (28) des Elements (24) mit U-förmigem Profil, so daß dieser Schenkel (28) zwischen die Schenkel (7, 8) des Stegs (2) einführbar ist und auf der Übergangsstufe (11, 12) ruht;
c) eine Vorrichtung (81, 46), welche das Element (24) in den Schenkeln (7, 8) des Stegs (2) festhält.

2. Verbindungseinrichtung nach Anspruch 1, **dadurch gekennzeichnet,** daß zwei gleich aufgebaute Elemente (24, 25) vorgesehen sind.

3. Verbindungseinrichtung nach Anspruch 2, **dadurch gekennzeichnet,** daß die beiden gleich aufgebauten Elemente (24, 25) bei der Montage mit ihren seitlichen Schenkeln (29, 31 bzw. 28, 30) wenigstens teilweise übereinander geschoben werden, wodurch sie eine feste Verbindung herstellen.

4. Verbindungseinrichtung nach Anspruch 3, **dadurch gekennzeichnet,** daß die seitlichen Schenkel (28, 31) der Elemente (24, 25) ungleiche Profile aufweisen und daß bei der Montage der eine Schenkel (29, 30) des einen Elements (24, 25) über den anderen Schenkel (31, 28) des jeweils anderen Elements (25, 24) geschoben wird.

5. Verbindungseinrichtung nach Anspruch 1, **dadurch gekennzeichnet,** daß zwei identisch ausgebildete Verbindungsflächen aufweisende und mittels dieser Verbindungsflächen aneinanderliegende Elemente (24, 25) vorgesehen sind, von denen jedes Element einen Grund- oder Haltesteg (26, 27) aufweist, von dem ein erster, senkrecht hierzu verlaufender Schenkel (29, 30) und ein zu diesem hingeneigter zweiter Schenkel (28, 31) ausgehen, wobei der geneigte zweite Schenkel (28, 31) jedes Elements (24, 25) auf seiner Außenseite wenigstens eine Einkerbung (38, 39) aufweist und im Einbauzustand ein Vorsprung (36) des zweiten Elements (25) in die Einkerbung (38) des ersten Elements (24) und ein Vorsprung (37) des ersten Elements (24) in die Einkerbung (39) des zweiten Elements (25) einrastet.

6. Verbindungseinrichtung nach einem oder nach mehreren der vorangegangenen Ansprüche, **dadurch gekennzeichnet,** daß die seitlichen Schenkel (28 bis 31) in ihren unteren Bereichen (32 bis 35) im Vergleich zu ihren oberen Bereichen (42, 43, 44, 45) verdickt sind.

7. Verbindungseinrichtung nach Anspruch 6, **dadurch gekennzeichnet,** daß der senkrecht auf dem Grund- oder Haltesteg (26, 27) stehende Schenkel (29, 30) einen unteren Bereich (33, 34) besitzt, der etwa ein Drittel der gesamten Schenkellänge ausmacht, und daß der obere Bereich auf seiner Innenfläche (46, 47) im wesentlichen parallel zur Innenfläche (48, 49) des unteren Bereichs (33, 34) verläuft, während er auf seiner Außenseite (50, 51) gegenüber dem unteren Bereich (33, 34) etwa um ein Drittel nach innen versetzt ist.

8. Verbindungseinrichtung nach Anspruch 7, **dadurch gekennzeichnet,** daß der senkrecht auf dem Grund- oder Haltesteg (26, 27) stehende Schenkel (29, 30) an seinem Ende eine Schnappnase (36, 37) mit einer Kehle (40, 41) aufweist.

9. Verbindungseinrichtung nach Anspruch 6, **dadurch gekennzeichnet,** daß der geneigte Schenkel (28, 31) im Anschluß an den unteren, senkrecht zum Grund- oder Haltesteg (26, 27) stehenden Bereich (32, 35) einen ersten geneigten Bereich (42, 43) und hieran anschließend einen zweiten geneigten Bereich (44, 45) aufweist.

10. Verbindungseinrichtung nach Anspruch 9, **dadurch gekennzeichnet,** daß die Außenseite des ersten geneigten Bereichs (42, 43) in bezug auf die Außenseite des unteren Bereichs (32, 35) und die Außenseite des zweiten geneigten Bereichs (44, 45) eine mit einer Neigung versehene Vertiefung (38, 39) darstellt.

11. Verbindungseinrichtung nach Anspruch 1, **dadurch gekennzeichnet,** daß zwischen dem Grund- oder Haltesteg (26, 27) und den seitlichen Schenkein (28 bis 31) ein dreieckförmiger Vorsprung (52 bis 55) vorgesehen ist.

12. Verbindungseinrichtung nach Anspruch 1, **dadurch gekennzeichnet,** daß an die seitlichen Schenkel (7 bis 10) nach außen versetzt angeordnete weitere seitliche Schenkel (15 bis 18) vorgesehen sind, so daß beide Schenkel (7 bis 10, 15 bis 18) ein Profil bilden, das eine kleine rechteckige untere Aussparung und eine größere rechteckige obere Aussparung aufweist, wobei die untere Aussparung zur Aufnahme der Schrauben oder Nieten und die obere Aussparung zur Aufnahme der Elemente (24, 25) der Vorrichtung (23) dienen.

13. Verbindungseinrichtung nach Anspruch 12, **dadurch gekennzeichnet,** daß der durch die rechteckigen Aussparungen gebildete Zwischensteg (11 bis 14) als Führung fur die beiden Elemente (24, 25) dient.

14. Verbindungseinrichtung nach einem oder mehreren der vorangegangenen Ansprüche, **dadurch gekennzeichnet,** daß die Breite des Grundstegs (26, 27) im wesentlichen dem Abstand zwischen den Oberkanten der seitlich versetzten Schenkel (15 bis 18) entspricht.

15. Verbindungseinrichtung nach Anspruch 1, **dadurch gekennzeichnet,** daß sie für die Verbindung mehrerer gleichartiger Bauteile (64, 65) vorgesehen ist, deren Verbindung eine Gitterstruktur ergibt.

16. Verbindungseinrichtung nach Anspruch 1, **dadurch gekennzeichnet,** daß sie für die Verbindung von ungleichartigen Bauteilen (64; 69, 70) vorgesehen ist.

17. Verbindungseinrichtung nach Anspruch 1, **dadurch gekennzeichnet,** daß für die Herstellung einer Verbindung zwischen einem Bauteil (64) und einem Rahmen (79) ein Distanzstück (80) vorgesehen ist, dessen vom Rahmen (79) weggerichteter Kopf (81) ebenso ausgebildet ist wie derjenige Teil des Bauteils (64), der für die Herstellung der Verbindung dient.

18. Verbindungseinrichtung nach Anspruch 1, **dadurch gekennzeichnet,** daß wenigstens ern Element (z. B. 24) der Vorrichtung (23) an seinen Schenklen (28, 29) Längsnuten aufweist, durch welche der Schaft einer Schraube (83) gesteckt werden kann.

19. Verbindungseinrichtung nach Anspruch 1, **dadurch gekennzeichnet,** daß die im wesentlichen parallelen Stege (2, 3) ineinandergreifende Vertiefungen (67, 68) aufweisen.

## Claims

1. Linking arrangement in which a first and a second flange (2, 3) are juxtaposed and joined together by at least one threaded or riveted connection (4), where the longitudinal axis of a bolt or rivet (5, 6) runs essentially perpendicular to the flanges (2, 3) and an element (24) is provided which has an essentially U-shaped profile with a base flange (2) and two arms (28, 29) projecting essentially perpendicular to the latter and which covers the bolt heads (56) or rivets (5, 6) or nuts of the threaded connection such that these are inaccessible, whereby the first of the two flanges (2) has two arms (7, 8) pointing away from the second flange (3), the two arms being at least as high as the bolt heads (56), nuts (57) or rivets (5, 6) and separated by a gap which is smaller in the vicinity of the first flange (2) than further away from this flange (2), **characterised in that:**
a) between the smaller and greater distance separating the the two arms (7, 8) of the flange (2) a transitional step (11, 12) is provided which runs perpendicular to the two arms (7, 8);
b) the greater distance separating the two arms (7, 8) of the flange (2) is equal to the width of one arm (28) of the element (24) with a U-shaped profile, so that this arm (28) can be inserted between the arms (7, 8) of the flange (2) and rests against the transitional step (11, 12);
c) a mechanism (81, 46) is provided which holds the element (24) in the arms (7, 8) of the flange.

2. Linking arrangement as described in Claim 1, **characterised in that** two similarly constructed elements (24, 25) are provided.

3. Linking arrangement as described in Claim 2, **characterised in that** on assembly the lateral arms (29, 31 or 28, 30) of the two similarly constructed elements (24, 25) are at least partially pushed over one another, thereby forming a secure connection.

4. Linking arrangement as described in Claim 3, **characterised in that** the lateral arms (28, 31) of the elements (24, 25) have dissimilar profiles and that on assembly one arm (29, 30) of one element (24, 25) is pushed over the other arm (31, 28) of the other element (25, 24).

5. Linking arrangement as described in Claim 1, **characterised in that** two elements (24, 25) are provided, having identically shaped connecting surfaces and with these connecting surfaces in contact with each other, and each of these elements having a base or retaining flange (26, 27), from which project a first arm (29, 30) running parallel to the latter and a second arm (28, 31) inclined towards it, whereby the inclined second arm (28, 31) of each element (24, 25) has at least one notch (38, 39) on its outer side and when installed a projection (36) on the second element (25) locks into the notch (38) of the first element (24) and a projection (37) of the first element (24) locks into the notch (39) of the second element (25).

6. Linking arrangement as described in one or more of the preceding Claims, **characterised in that** the lateral arms (28 to 31) are thickened in their lower portions (32 to 25) compared with their upper portions (42, 43, 44, 45).

7. Linking arrangement as described in Claim 6, **characterised in that** the arm (29, 30) projecting perpendicularly from the base or retaining flange (26, 27) has a lower section (33, 34) constituting approximately one third of the entire length of the arm, and that the inner face (46, 47) of the upper section runs essentially parallel to the inner face (48, 49) of the lower section (33, 34), whilst its outer face (50, 51) is offset inwards by approximately one third relative to the lower section (33, 34).

8. Linking arrangement as described in Claim 7, **characterised in that** the arm (29, 30) projecting perpendicularly from the base or retaining flange (26, 27) has at its end a self-locking catch (36, 37) with a depression (40, 41).

9. Linking arrangement as described in Claim 6, **characterised in that** the inclined arm (28, 31) possesses following the lower portion (32, 35) which projects perpendicular to the base or retaining flange (26, 27) a first inclined portion (42, 43) and, following on from this, a second inclined portion (44, 45).

10. Linking arrangement as described in Claim 9, **characterised in that** the outer side of the first inclined portion (42, 43) is in the form of a recess (38, 39) provided with a slope relative to the outer side of the lower portion (32, 35) and the outer side of the second inclined portion (44, 45).

11. Linking arrangement as described in Claim 1, **characterised in that** a triangular projection (52 to 55) is provided between the base or retaining flange (26, 27) and the lateral arms (28 to 31).

12. Linking arrangement as described in Claim 1, **characterised in that** additional arms (15 to 18) offset towards the outer side are provided on the lateral arms (7 to 10) so that the two arms (7 to 10, 15 to 18) form a profile having a small lower rectangular recess and a larger upper rectangular recess, the lower recess serving to locate bolts or rivets and the upper recess to locate the elements (24, 25) of the arrangement (23).

13. Linking arrangement as described in Claim 12, **characterised in that** the intermediate flange (11 to 14) formed by the rectangular recesses functions as a guide for the two elements (24, 25).

14. Linking arrangement as described in one or more of the above Claims, **characterised in that** the width of the base flange (26, 27) is in principle equal to the distance between the upper edges of the two laterally offset arms (15 to 18).

15. Linking arrangement as described in Claim 1, **characterised in that** it is intended for the linking together of several similar components (64, 65), the linking of which produces a lattice structure.

16. Linking arrangement as described in Claim 1, **characterised in that** it is provided for the linking together of dissimilar components (64; 69, 70).

17. Linking arrangement as described in Claim 1, **characterised in that** to provide a joint between a component (64) and a frame (79) a distance-piece (80) is provided, the end (81) of which, further away from the frame (79), is shaped similarly to that part of the component (64) which serves to provide the connection.

18. Linking arrangement as described in Claim 1, **characterised in that** at least one element (e.g. 24) of the arrangement (23) has longitudinal grooves on its arms (28, 29), through which the shank of a bolt (83) may be inserted.

19. Linking arrangement as described in Claim 1, **characterised in that** the in principle parallel flanges (2, 3) have interlocking depressions (67, 68).

## Revendications

1. Dispositif de raccordement, avec lequel un premier et un deuxième dos (2, 3) reposent l'un sur l'autre et sont reliables entre eux par au moins un raccordement rivé ou vissé (4), où l'axe longitudinal d'une vis ou d'un rivet (5, 6) s'étend essentiellement perpendiculaire aux dos (2, 3) et où un élément (24) est prévu, qui comporte un profilé essentiellement en forme de U présentant un dos de base (2) et, reposant dessus, deux branches se trouvant essentiellement perpendiculaires (28,29) et qui recouvrent les têtes de vis (56) respectivement les rivets (5, 6), respectivement les écrous des raccordements vissés de sorte que ceux-ci soient inaccessibles, le premier des deux dos (2) présentant alors deux branches (7, 8) détournées du deuxième dos (3), qui sont au moins aussi hautes que les têtes de vis, (56), les écrous (57) ou les rivets (5,6), et qui présentent un écart l'une de l'autre, qui est, à proximité du premier dos (2), plus petit que dans un éloignement plus important de ce dos (2), caractérisé par les caractéristiques suivantes :
a) entre le plus petit et le plus grand écarts des deux branches (7,8) du dos (2) est prévu un palier intermédiaire (11, 12), qui s'étend parallèlement aux branches (7, 8) ;
b) le plus grand écart entre les deux branches (7, 8) du dos (2) correspond à la largeur d'une branche (28) de l'élément (24) présentant un profilé en forme de U, de sorte que cette branche (28) est inserrable entre les branches (7, 8) du dos (2) et prend appui sur le palier intermédiaire (11, 12) ;
c) un dispositif (81, 46) qui maintient fixement l'élément (24) dans les branches (7, 8) du dos (2).

2. Dispositif de raccordement selon la revendication 1, caractérisé en ce que deux éléments (24, 25) de construction semblable sont prévus.

3. Dispositif de raccordement selon la revendication 2, caractérisé en ce que les deux éléments (24, 25) de construction semblable, lors de l'assemblage avec leurs branches latérales (29, 31 respectivement 28, 30), sont poussés, au moins partiellement, l'un au-dessus de l'autre, ce qui établit un raccordement fixe.

4. Dispositif de raccordement selon la revendication 3, caractérisé en ce que les branches latérales (28, 31) des éléments (24, 25) présentent des profilés inégaux et en ce que lors de l'assemblage, une branche (29, 30) d'un élément (24, 25) est poussée au-dessus de l'autre branche (31, 28) de chacun des autres éléments (25, 24).

5. Dispositif de raccordement selon la revendication 1, caractérisé en ce que sont prévus deux éléments (24, 25) présentant des surfaces de raccordement conçues de manière identique et se trouvant l'un à côté de l'autre à l'aide de ces surfaces de raccordement, dont chaque élément présente un dos de support ou de base (26, 27), d'où partent une première branche (29, 30) s'étendant perpendiculairement à celui-ci et une deuxième branche (28, 31) inclinée vers celle-ci, la deuxième branche inclinée (28, 31) de chaque élément (24, 25) présentant alors, sur sa face externe, au moins une encoche (38, 39) et, dans la position d'encastrement, une saillie (36) du deuxième élément (25) s'encliquetant alors dans l'encoche (38) du premier élément (24) et une saillie (37) du premier élément (24) dans l'encoche (39) du deuxième élément (25).

6. Dispositif de raccordement selon l'une ou plusieurs des revendications précédentes, caractérisé en ce que les branches latérales (28 à 31) présentent une surépaisseur dans leurs zones inférieures (32 à 35) en comparaison de leurs zones supérieures (42, 43, 44, 45).

7. Dispositif de raccordement selon la revendication 6, caractérisé en ce que la branche (29, 30) reposant verticalement sur le dos de support ou de base (26, 27) dispose d'une zone inférieure (33, 34) qui représente environ un tiers de la longueur totale de la branche et en ce que la zone supérieure sur sa surface interne (46, 47), s'étend, pour l'essentiel, parallèlement à la surface interne (48, 49) de la zone inférieure (33, 34), alors que sur sa face externe (50, 51), elle est décalée environ d'un tiers vers l'intérieur vis à vis de la zone inférieure (33, 34).

8. Dispositif de raccordement selon la revendication 7, caractérisé en ce que la branche (29, 30) reposant verticalement sur le dos de support ou de base (26, 27) présente, à son extrémité, un tenon de blocage (36, 37) comportant une gorge (40, 41).

9. Dispositif de raccordement selon la revendication 6, caractérisé en ce que la branche inclinée (28, 31) présente, dans la continuité de la zone inférieure (32, 35) reposant perpendiculairement au dos de support ou de base (26, 27), une première zone inclinée (42, 43) et une deuxième zone inclinée qui s'y rattache (44, 45).

10. Dispositif de raccordement selon la revendication 9, caractérisé en ce que la face extérieure de la première zone inclinée (42, 43) en se rapportant à la face externe de la zone inférieure (32, 35) et la face extérieure de la deuxième zone inclinée (44, 45) représente une cavité munie d'une inclinaison (38, 39).

11. Dispositif de raccordement selon la revendication 1, caractérisé en ce qu'entre le dos de support ou de base (26, 27) et les branches latérales (28 à 31) est prévue une saillie de forme triangulaire (52 à 55).

12. Dispositif de raccordement selon la revendication 1, caractérisé en ce que sur les branches latérales (7 à 10) sont prévues d'autres branches latérales (15 à 18) disposées de manière décalée vers l'extérieur de sorte que les deux branches (7 à 10, 15 à 18) forment un profilé, qui présente un petit évidement inférieur rectangulaire et un évidement supérieur plus grand rectangulaire, l'évidement inférieur servant alors à la réception des vis ou rivets et l'évidement supérieur à la réception des éléments (24, 25) du dispositif (23).

13. Dispositif de raccordement selon la revendication 12, caractérisé en ce que la branche intermédiaire (11 à 14) formée par les évidements rectangulaires sert de guidage pour les deux éléments (24, 25).

14. Dispositif de raccordement selon l'une ou plusieurs des revendications précédentes, caractérisé en ce que la largeur du dos de base (26, 27) correspond, pour l'essentiel, à l'écart entre les arêtes supérieures des branches décalées latéralement (15 à 18).

15. Dispositif de raccordement selon la revendication 1, caractérise en ce qu'il est prévu un raccordement de plusieurs composants du même type (64, 65), ce raccordement donnant une structure quadrillée.

16. Dispositif de raccordement selon la revendication 1, caractérisé en ce qu'il est prévu un raccordement de composants de type dissemblable (64, 69, 70).

17. Dispositif de raccordement selon la revendication 1, caractérisé en ce que pour l'établissement d'un raccordement entre un composant (64) et un cadre (79) une pièce intercalaire (80) est prévue, dont la tête (81) détournée du cadre (79) est également conçue comme la partie du composant (64), qui sert à établir le raccordement.

18. Dispositif de raccordement selon la revendication 1, caractérisé en ce qu'au moins un élément (par exemple 24) du dispositif (23) présente, sur ses branches (28, 29), des rainures longitudinales, par lesquelles peut être insérée la tige d'une vis (83).

19. Dispositif de raccordement selon la revendication 1, caractérisé en ce que les branches (2, 3) essentiellement parallèles présentent des cavités (67, 68) s'engageant les unes dans les autres.
